# EUROPÄISCHE PATENTSCHRIFT

(11) **EP 2 056 962 B1**
(45) Veröffentlichungstag und Bekanntmachung des Hinweises auf die Patenterteilung: **27.01.2016**
(21) Anmeldenummer: 07802844.6
(22) Anmeldetag: 24.08.2007
(51) Int. Cl.: B01J 23/72, B01J 27/04, B01J 27/043, B01J 37/20, C07C 7/148, C07C 7/167, C10G 70/02, C07C 7/163, C07C 5/09, B01D 53/64

(54) **VERFAHREN ZUR ENTFERNUNG VON SAUERSTOFF, STICKSTOFFOXIDEN, ACETYLENEN UND/ODER DIENEN AUS WASSERSTOFFREICHEN OLEFINHALTIGEN GASGEMISCHEN**
METHOD FOR THE ELIMINATION OF OXYGEN, NITROGEN OXIDES, ACETYLENES, AND/OR DIENES FROM HYDROGEN-RICH OLEFIN-CONTAINING GAS MIXTURES
PROCÉDÉ D'EXTRACTION D'OXYGÈNE, D'OXYDES D'AZOTE, D'ACÉTYLÈNES ET/OU DE DIÈNES À PARTIR DE MÉLANGES GAZEUX CONTENANT DES OLÉFINES, RICHES EN HYDROGÈNE

(30) Priorität: 25.08.2006 US 840026 P
(43) Veröffentlichungstag der Anmeldung: 13.05.2009
(73) Patentinhaber: BASF SE, 67056 Ludwigshafen (DE)
(72) Erfinder: RUDOLF, Peter, 68526 Ladenburg (DE); BENDER, Michael, 67061 Ludwigshafen (DE); KOCH, Michael, 68163 Mannheim (DE)
(86) Internationale Anmeldenummer: PCT/EP2007/058792
(87) Internationale Veröffentlichungsnummer: WO 2008/023051

(56) Entgegenhaltungen:
- EP-A- 0 225 185
- WO-A-2004/033598
- US-A- 5 245 106
- DJ ARTRIP ET AL: "Purification of olefinic streams for polymerisation units" PETROLEUM TECHNOLOGY QUARTERLY, CRAMBETH ALLEN, CRAVEN ARMS, GB, 1997, Seiten 103-107, XP008083999 ISSN: 1362-363X

## Beschreibung

Die Erfindung betrifft ein Verfahren zur Entfernung von Acetylen und gegebenenfalls einer oder mehrerer der Komponenten, ausgewählt aus der Gruppe bestehend aus Sauerstoff, Stickstoffoxiden und Dienen aus diese Komponenten enthaltenden wasserstoffreichen olefinhaltigen Gasgemischen.

Wasserstoffreiche olefinhaltige Kohlenwasserstoff-Ströme werden großtechnisch in so genannten Steamcrackern (Olefin-Anlagen) durch die thermische Spaltung von Paraffinen oder in Raffinerien durch die katalytische Spaltung von Paraffinen in so genannten FCC-Anlagen (FCC: fluid catalytic cracking) erhalten. Diese Spaltgase enthalten leichte gesättigte Kohlenwasserstoffe (Paraffine) und ungesättigte Kohlenwasserstoffe (Olefine und Acetylene) sowie molekularen Wasserstoff. Außerdem sind in diesen Spaltgasen Verunreinigungen im Bereich von einigen parts per million bis zu einigen Prozent enthalten.

Als Wertprodukte werden aus den Spaltgasen der Steamcracker beziehungsweise FCC-Anlagen durch Destillation und gegebenenfalls weitere katalytische Umwandlungen u. a. Olefine, hauptsächlich Ethylen und Propylen, gewonnen. Diese Produkte werden in Chemieanlagen eingesetzt, um Polymere wie Polyethylen oder Polypropylen beziehungsweise Chemikalien wie z. B. Styrol, Cumol, Butyraldehyd oder Propylenoxid herzustellen.

Als Nebenprodukte werden in den Spaltprozessen Acetylene und Diene gebildet, die keine primären Wertprodukte darstellen, sondern die Weiterverarbeitung der Olefine stören können. Insbesondere in Steamcrackern fallen diese Verbindungen im Prozentbereich an und werden dort durch Selektivhydrierungen entfernt. Wird das Spaltgas zuerst destillativ aufgetrennt und dann selektiv hydriert, so spricht man von einer tail-end-Hydrierung. Wird das Spaltgas zuerst selektiv hydriert und danach in die verschiedenen Bestandteile aufgetrennt, so spricht man von einer front-end-Hydrierung. In den Selektivhydrierstufen werden vorzugsweise palladiumhaltige Katalysatoren verwendet, bei denen geringe Mengen des Edelmetalls als Aktivkomponente auf einem oxidischen Katalysatorträger eingesetzt werden. Alternativ können bei front-end-Hydrierungen auch nickelhaltige Katalysatoren eingesetzt werden.

Den Selektivhydrierungskatalsatoren ist gemeinsam, dass sie empfindlich auf die Gegenwart von Verunreinigungen reagieren, die durch Adsorption auf der Katalysatoroberfläche akkumuliert werden. Dort stören sie auf verschiedene Weisen die katalytische Umsetzung der Acetylene und Diene zu Olefinen. Typischerweise nimmt der Umsatzgrad der Acetylene und Diene ab und Reste dieser Verbindungen verbleiben im Wertproduktstrom und verursachen dort Probleme bei der Weiterverarbeitung.

Dieser als Vergiftung bezeichnete Prozess ist normalerweise irreversibel. Das deaktivierte Katalysatorbett muss gegen ein frisches Katalysatorbett ausgetauscht werden, um den gewünschten Umsetzungsgrad wiederherzustellen. Daneben können im Spaltgas enthaltene Verunreinigungen wie NOₓ, Sauerstoff und Acetylen zu Korrosionsproblemen oder zur Verstopfung von Anlageteilen führen und dadurch zu einer Gefährdung des Betriebspersonals und der Umwelt führen und auch wirtschaftlichen Schaden verursachen. So können Stickstoffoxide, Sauerstoff und Acetylene im Spaltgas zu explosiven Ablagerungen (so genanntem "Blue Ice", "Blue Gums", "Blue Liquids") in der so genannten "Cold box" des Steamcrackers, dem zentralen Wärmetauscher der Tieftemperaturdestillationsanlage, führen. Bei der Entfernung dieser Ablagerungen zur Vermeidung von Verstopfungen kann es zu Explosionen kommen.

Stickstoffoxide sind in Spaltgasen von Steamcrackern und speziell von FCC-Anlagen im ppm-Bereich enthalten. Sie entstehen aus stickstoffhaltigen Verbindungen durch verschiedene Oxidationsprozesse. Sauerstoff ist vor allem in Spaltgasen von FCC-Anlagen vorhanden. Spuren von Sauerstoff gelangen in diesen Stoffstrom durch Verschleppung aus dem Regeneratorteil der FCC-Anlage. Zur Vermeidung der explosiven Ablagerungen müssen daher Stickstoffoxide und Sauerstoff aus den Spaltgasen entfernt werden, bevor diese im Kaltteil von Steamcrackern aufbereitet werden. Derzeit werden hierfür nickelhaltige Katalysatoren eingesetzt, die jedoch einen Teil der im Spaltgas enthaltenen, werthaltigen Olefine in weniger werthaltige Paraffine umsetzen. Außerdem können Nickelkatalysatoren in Gegenwart von Kohlenmonoxid im Spaltgasstrom giftiges Nickeltetracarbonyl freisetzen.

Weitere Verunreinigungen umfassen Verbindungen von Elemente wie z. B. Schwefel, Arsen, Phosphor, Quecksilber, Vanadium, Cadmium oder Blei. Diese Elemente stellen ebenfalls starke Katalysatorgifte dar und können die Katalysatoren in den Selektivhydrierungsstufen vergiften. Sie können chemisch nicht so umgesetzt werden, dass sie als harmlose Verbindungen im Spaltgas verbleiben könnten. Deshalb werden diese Elemente durch physikalische oder chemische Adsorption auf einem geeigneten Reinigungsadsorbens akkumuliert und damit aus dem Spaltgas entfernt. Hier kommen z. B. bleioxidhaltige Adsorbentien zum Einsatz, die wegen ihrer Umwelt- und Gesundheitsgefährlichkeit problematisch sind.

Um die genannten Reinigungsschritte durchzuführen, muss der Spaltgasstrom durch mehrere separate Reinigungseinheiten geführt werden, in denen die jeweiligen chemischen Reaktionen zur Entfernung der störenden Komponente oder eine Adsorption durchgeführt wird. Dies führt zu einer großen Anzahl an Reaktoren und Katalysatorbetten zu Reinigungszwecken in der petrochemischen Anlage. Wünschenswert ist es daher, mehrere Reinigungsschritte an einem einzigen Katalysator- und Adsorptionsbett gleichzeitig durchzuführen und damit die Komplexität des Gesamtprozesses zu verringern.

WO-A 2004/033598 offenbart ein Verfahren zur Entfernung von Sauerstoff und Acetylenen aus einem diese enthaltenden wasserstoffreichen, olefinhaltigen Gasstrom, wie er beim autothermen Cracken von paraffinischen Kohlenwasserstoffen wie Ethan anfällt. Dabei wird der Gasstrom an einem Katalysator, der ein Metall der Gruppe 10 oder 11 des Periodensystems der Elemente oder dessen Oxid auf einem Träger enthält, umgesetzt. Bevorzugte Katalysatoren enthalten Platin und Zinn auf Siliziumdioxid oder Kupfer auf einem Zeolith-Träger.

EP 0 225 185 offenbart ein ähnliches Verfahren, wobei u.a. Kupfersulfid als Katalysator eingesetzt werden kann zur selektiven Hydrierung von Acetylen.

Aufgabe der vorliegenden Erfindung ist es, ein Verfahren zur Entfernung von störenden Nebenkomponenten aus Wasserstoff und Olefine enthaltenden Gasströmen bereitzustellen, bei dem die störenden Nebenkomponenten effizient zu unschädlichen Komponenten umgesetzt oder adsorbiert werden, ohne dass in praktisch wesentlichem Ausmaß die als Wertprodukte enthaltenen Olefine umgesetzt werden. Aufgabe der Erfindung ist es insbesondere, ein solches Verfahren zur Reinigung von wasserstoffreichen olefinhaltigen Spaltgasströmen, wie sie beim Cracken (Steamcracken oder katalytischem Cracken) anfallen, bereitzustellen. Aufgabe ist es weiterhin, ein solches Verfahren bereitzustellen, mit dem möglichst viele verschiedene unerwünschte Nebenkomponenten in einem Verfahrensschritt entfernt werden können.

Gelöst wird die Aufgabe durch ein Verfahren zur Entfernung von Acetylen und gegebenenfalls einer oder mehrerer der Komponenten ausgewählt aus der Gruppe bestehend aus Sauerstoff, Stickstoffoxiden und Dienen, aus einem Gasgemisch, das Acetylen und gegebenenfalls eine oder mehrere der Komponenten, ausgewählt aus der Gruppe bestehend aus Sauerstoff, Stickstoffoxiden und Dienen, und daneben Wasserstoff, ein oder mehrere Olefine, die keine Diene sind, und gegebenenfalls weitere Gasbestandteile enthält, bei dem das Gasgemisch in einer Reaktionszone mit einem Katalysator in Kontakt gebracht wird, dadurch gekennzeichnet, dass der Katalysator Kupfer(I)sulfid enthält.

Geeignete Kupfer(I)sulfid enthaltende Katalysatoren werden, ausgehend von einem Kupferoxid CuO enthaltenden Material, durch Reduktion des Kupferoxids zu metallischem Kupfer und Sulfidierung des Kupfers mit einer schwefelhaltigen Verbindung erhalten. Das Kupferoxid enthaltende Material enthält im Allgemeinen 5 bis 80 Gew.-%, bevorzugt 10 bis 50 Gew.-% CuO vorzugsweise im Gemisch mit einem porösen inerten Trägermaterial, beispielsweise Aluminiumoxid, SiO₂, SiO₂/Al₂O₃, Zeolithe, Tone, aber auch andere Oxide bzw. Mischoxide von Cr, Zr, Zn, Y, Ce, Sn, Ca, Sr, Mg, Ba und Ti sowie deren Mischungen, beispielsweise Siraloxe, CaTiO₃, MgAl₂O₄ und Mg₂SiO₄. Die Herstellung des Katalysators kann durch Tränkung oder durch Fällen erfolgen und kann gemäß dem Stand der Technik durchgeführt werden. Der Katalysator wird anschließend extrudiert oder tablettiert. Im Allgemeinen wird CuO in einer wasserstoffhaltigen Atmosphäre zum metallischen Kupfer reduziert. Geeignete schwefelhaltige Verbindungen, mit denen sulfidiert wird, sind Schwefelwasserstoff und organische schwefelhaltige Verbindungen, insbesondere Dialkyldisulfide wie Dimethyldisulfid, Diethyldisulfid und Dipropyldisulfid, und Dialkylpolysulfide wie Di-tert.-butylpolysulfid. Die Sulfidierung kann durch Überleiten eines das Sulfidierungsreagenz enthaltenden Gases über das reduzierte, aktives Kupfer enthaltende Material oder durch Behandlung des reduzierten, aktives Kupfer enthaltenden Materials mit einer Lösung des Sulfidierungsreagenz erfolgen. Reduktions- und Sulfidierungsschritt können auch gleichzeitig erfolgen, beispielsweise durch Überleiten eines Wasserstoff und Schwefelwasserstoff enthaltenden Gasgemischs über das Kupferoxid enthaltende Material. Nach der Sulfidierung und vor Einsatz des Katalysators zu in dem erfindungsgemäßen Verfahren kann der Katalysator mit einem wasserstoffhaltigen Strom zusätzlich aktiviert werden.

In einer Ausführungsform wird der Kupfer(I)sulfid enthaltende Katalysator durch Reduktion (Aktivierung) des Kupferoxid enthaltenden Materials mit einem wasserstoffhaltigen Gasstrom bei einem Druck von beispielsweise 0,1 bis 10 bar und einer Temperatur von beispielsweise 150 bis 250 °C und anschließender Sulfidierung mit einem H₂S enthaltenden Gasstrom bei einem Druck von beispielsweise 1 bis 20 bar und einer Temperatur von beispielsweise 150 bis 250 °C und hergestellt. Der H₂S enthaltenden Gasstrom enthält beispielsweise 0,1 bis 10 Vol.-% H₂S in Wasserstoff.

In einer weiteren Ausführungsform wird das zuvor mit Wasserstoff aktivierte kupferhaltige Material mit einem Gasstrom, der ein Dialkyldisulfid in Wasserstoff enthält, behandelt. In einer weiteren Ausführungsform wird das aktivierte kupferhaltige Material mit einer Lösung von Dialkylpolysulfid, beispielsweise Di-tert.-butylpolysulfid, in einem KohlenwasserstoffLösungsmittel, beispielsweise Heptan, behandelt.

Der Katalysator ist im Allgemeinen in stückiger Form (beispielsweise in Form von Tabletten oder Extrudaten) als Festbett angeordnet. Mehrere solcher Reinigungsbetten können in mehreren Reaktoren hintereinander angeordnet sein.

Bevorzugt enthält der Katalysator Kupfer(I)sulfid auf einem Träger.

Das zu reinigende Olefin enthaltende Gasgemisch kann nur eine der vier störenden Komponenten Sauerstoff, Stickstoffoxide, Acetylene (Alkine) oder Diene, zwei der vier Komponenten, also nur Sauerstoff und Stickstoffoxide, nur Sauerstoff und Acetylene, nur Sauerstoff und Diene oder Stickstoffoxide und Acetylene, Stickstoffoxide und Diene, oder Acetylene und Diene, drei der vier Komponenten, also Sauerstoff, Stickstoffoxide und Acetylene oder Stickstoffoxide, Acetylene und Diene oder Sauerstoff, Acetylene und Diene oder Sauerstoff, Stickstoffoxide und Diene oder alle vier Komponenten enthalten.

Acetylene sind beispielsweise Acetylen (Ethin), Propin und 1- oder 2-Butin; Diene sind beispielsweise Allen oder Butadiene, wie 1,3-Butadien oder 1,2-Butadien. Stickstoffoxide sind NO, NO₂ und N₂O₃, die häufig miteinander im Gemisch vorliegen. Acetylene und Diene liegen häufig gemeinsam vor.

Als Olefine enthält das zu reinigende Gasgemisch bevorzugt Ethen und/oder Propen.

Der Sauerstoffgehalt -sofern Sauerstoff vorhanden ist- des zu reinigenden Eingangsgasgemischs liegt im Allgemeinen im Bereich von 1 ppm bis 3 Vol.-% , bevorzugt 1 bis 2000 ppm. Der Stickstoffoxid-Gehalt des Eingangsgasgemischs -sofern Stickstoffoxide vorhanden sind- liegt im Allgemeinen im Bereich von 1 bis 2000 ppm, bevorzugt 5 bis 1000 ppm. Der Acetylen-Gehalt des Eingangsgasgemischs -sofern Acetylene vorhanden sind- liegt im Allgemeinen im Bereich von 5 ppm bis 1 Vol.-%, bevorzugt 5 bis 2000 ppm. Der Dien-Gehalt des Eingangsgasgemischs -sofern Diene vorhanden sind- liegt im Allgemeinen im Bereich von 5 ppm bis 1 Vol.-%, bevorzugt 5 bis 2000 ppm. Der Wasserstoffgehalt des Gasgemischs liegt im Allgemeinen im Bereich von 1 bis 70 Vol.-%, bevorzugt 1 bis 40 Vol.-%. Der Olefingehalt des Eingangsgasgemischs liegt im Allgemeinen im Bereich von 1 bis 60 Vol.-%, bevorzugt 1 bis 20 Vol.-%.

Als weitere Gasbestandteile enthält das zu reinigende Gasgemisch im Allgemeinen Alkane wie Methan, Ethan, Propan und Butane. Daneben kann es noch Vinylacetylen enthalten. Zusätzlich können noch schwefelhaltige Verbindungen wie z.B. H₂S, COS, Thiole oder Thioether im Gasstrom enthalten sein. Ferner kann der Gasstrom auch CO, CO₂, N₂ und stickstoffhaltige Verbindungen (z.B. NH₃) enthalten.

Als zusätzliche Bestandteile können höhere Kohlenwasserstoffe, wie z.B. C₅- und/oder C₆-Komponenten zugegen sein.

Daneben kann das Eingangsgasgemisch toxische Verbindungen des Phosphors, Arsens, Cadmiums, Quecksilbers, Vanadiums oder Bleis enthalten. Beispiele sind Phosphin (PH₃), Arsenwasserstoff (AsH₃) und Hg. Diese können in Mengen von insgesamt 10 bis 1000 ppm in dem Gasgemisch enthalten sein.

Ein weiterer Gegenstand der vorliegenden Erfindung ist daher ein erfindungsgemäßes Verfahren, bei dem das Eingangsgasgemisch eine oder mehrere Phosphor, Arsen, Cadmium, Quecksilber, Vanadium und/oder Blei enthaltende Verbindungen enthält, wobei diese durch Adsorption an dem Katalysator aus dem Gasgemisch entfernt werden.

Im Allgemeinen liegt die Temperatur in der Reaktionszone im Bereich von 150 bis 300 °C, bevorzugt 150 bis 275 °C und der Druck in der Reaktionszone im Bereich von 5 bis 40 bar, bevorzugt 5 bis 35 bar. Die Belastung (GHSV) liegt im Allgemeinen im Bereich von 500 bis 3000 h⁻¹, bevorzugt 1000 bis 2000 h⁻¹.

Das erfindungsgemäße Verfahren zeichnet sich durch eine sehr hohe Selektivität aus. So werden im Allgemeinen mindestens 98%, bevorzugt mindestens 99,5% der störenden Komponenten O₂, NOₓ, Acetylene und/oder Diene aus dem zu reinigenden olefinhaltigen Gasstrom entfernt. Dabei wird aber nur in ganz untergeordnetem Maße das in dem Gasstrom enthaltene Olefin zum entsprechenden Alkan, beispielsweise Ethen zu Ethan oder Propen zu Propan hydriert. So wird im Allgemeinen weniger als 1 % des im Gasstrom enthaltenen Olefins zum entsprechenden Alkan hydriert.

Das Verfahren zeichnet sich weiterhin auch dadurch aus, dass in dem Gasstrom enthaltene Verbindungen des Phosphors, Arsens, Cadmiums, Quecksilbers, Vanadiums oder Bleis an dem Katalysator ebenfalls adsorbiert werden. So werden im Allgemeinen mindestens 50%, bevorzugt mindestens 95% dieser Verbindungen an einem Reinigungsbett aus dem Katalysator adsorbiert.

Das erfindungsgemäße Verfahren zeichnet sich weiterhin dadurch aus, dass mit ein und demselben Katalysator eine ganze Reihe von störenden Nebenkomponenten entfernt werden kann. Der Katalysator kann in nur einem Reinigungsbett oder in einer Kaskade von mehreren hintereinander geschalteten Reinigungsbetten angeordnet sein. Wird mit einer Kaskade von Reaktoren gearbeitet, so können die Bedingungen von Reaktor zu Reaktor variieren, um ein optimales Reinigungsergebnis zu erzielen.

### Beispiele

### Herstellung von sulfidierten Kupferkatalysatoren

### Beispiel 1

Ausgehend von einem Kupferoxid enthaltenden Katalysator (45 % CuO, 16 % MgO, 35 % SiO₂, 0,9 % Cr₂O₃, 1,1 % BaO und 0,6 % ZnO) wurde in einem ersten Schritt das oxidische Kupfer in elementares Kupfer durch Reduktion in einer wasserstoffhaltigen Atmosphäre überführt. Hierzu wurden 50 ml des Kupferoxid-Katalysator in der oxidischen Form in einen *200 ml* Reaktor eingefüllt. Der Reaktor wurde inertisiert und drucklos mit einem wasserstoffhaltigen Gas beaufschlagt (100 Nl/h, 5% H₂ in N₂, 200 °C, 24 h). Im Anschluss an diese Reduktion wurde der Katalysator einer Schwefelung unterzogen. Hierzu wurde der reduzierte Katalysator 6 h lang mit 1 Vol.-% H₂S in H₂ (50 NI/h insgesamt) bei 10 bar und 220 °C durchströmt. Anschließend wurde der so erhaltene sulfidierte Kupferkatalysator analysiert. Mit XRD wurden keine elementaren Kupferkristallite mehr nachgewiesen; hingegen wurden mittels XRD Cu₂S sowie in untergeordnetem Maße Cu₃₁S₁₆ mit nachgewiesen. Die Elementaranalyse ergab ein Cu/S Massenverhältnis *von* 3,78. In Abhängigkeit von den Bedingungen bei der Schwefelung können Atomverhältnisse zwischen 1,8 : 1 und 2,4 : 1 erhalten werden.

Die Herstellung des Katalysators gelingt auch ausgehend von dem Kupferoxid-Katalysator, wenn man diesen direkt mit einem Gemisch aus H₂S und H₂ (1 Vol.-% H₂S, 5 Vol.-% H₂, 94 Vol.-% N₂) über einen Zeitraum von 12 h behandelt.

Die Herstellung des Katalysators gelingt auch, wenn man den mit H₂ reduzierten Kupferkatalysator in einem Drehrohr mit schwefelhaltigen Reagenzien wie Dimethyldisulfid, Diethyldisulfid oder Dipropyldisulfid in Gegenwart von H₂ umsetzt.

### Beispiel 2

Die Herstellung des Katalysators gelingt auch, wenn man den mit Wasserstoff reduzierten Kupferkatalysator in flüssiger Phase mit einem Polysulfid umsetzt. Hierzu wurden beispielsweise 200 g des reduzierten Kupferkatalysators zu einer Lösung von 35 g Di-tert.-butylpolysulfid in 200 g Heptan zugegeben. Anschließend wurde das Lösungsmittel bei 50 °C im Vakuum abdestilliert. Anschließende wurde bei 50 °C und 10 mbar getrocknet.

Das Massenverhältnis Cu/S betrug 3,16. Der Katalysator wurde anschließend bei 150 °C mit einem wasserstoffhaltigen Gas (5% H₂ in N₂) aktiviert.

### Beispiel 3

PuriStar R3-81, ein kupferhaltiger Katalysator, wurde entsprechend der in Beispiel 1 beschriebenen Methode erhalten, wobei die CuO enthaltende Vorstufe in situ zunächst mit wasserstoffhaltigem Gas aktiviert und anschließend mit H₂S in Wasserstoff in die sulfidierte Form überführt wurde.

### Katalysatortest

### Beispiel 4

Die Versuche wurden in einem kontinuierlich betriebenen Versuchsreaktor (50 ml Katalysator) durchgeführt. Die einzelnen gasförmigen Einsatzkomponenten wurden vor dem Eintritt in den Reaktor gemischt und anschließend auf Reaktionstemperatur vorgeheizt. Der thermisch isolierte und mit Stützheizungen versehene Reaktor wurde von oben nach unten durchströmt. Die Reaktionstemperatur wurde zwischen 150 und 250 °C variiert. Der Reaktordruck betrug 10 bar. Die Temperaturerfassung erfolgte durch mehrere Themoelemente entlang der Katalysatorschüttung. Es wurde der Katalysator aus Beispiel 3 in Form von Tabletten eingesetzt. Nach Durchgang durch den Reaktor wurde das Produktgasgemisch auf Normaldruck entspannt. Die Kohlenwasserstoff-Komponenten des Produktgasgemischs wurden online via GC analysiert. Die O₂-Konzentration wurde ebenfalls online analysiert. Das Einsatzgasgemisch hatte folgende Zusammensetzung (MAPD = **M**ethyl**a**cetylen/**P**ropa**d**ien):

| | |
|---|---|
| Acetylen: | 20 ppm |
| MAPD: | 20 ppm |
| 1,3-Butadien: | 20 ppm |
| 1-Buten: | 1 Vol.-% |
| H₂S: | 20 ppm |
| O₂: | 200 ppm |
| NOₓ: | 250 ppm |
| CO: | 3 Vol.-% |
| H₂: | 20 Vol.-% |
| C₂H₄ | 13 Vol.-% |
| C₃H₆: | 5 Vol.-% |
| Hg | 10 ppm |
| As | 10 ppm |
| Ethan | 0,002 % |
| Propan | 0,002 % |
| Methan | Rest |

Die Umsetzung erfolgte bei Temperaturen von 150 bis 250 °C, einem Druck von 10 bar und einer GHSV von 1000 /h. Der Katalysator wurde unter N₂ auf eine Temperatur von 150 °C vorgeheizt, bevor der Einsatzgasstrom zugegeben wurde. Die Messreihe wurde ausgehend von 150 °C gestartet und anschließend wurde im laufenden Reaktorbetrieb die Temperatur schrittweise auf 250 °C erhöht. Die Analyse des Austrags ergab folgende Ergebnisse:

| **Temp.** | **150 °C** | **175 °C** | **250 °C** |
|---|---|---|---|
| Acetylen [ppm] | 14 | 4 | nicht nachweisbar |
| MAPD [ppm] | 17 | 5,5 | 1 |
| 1,3-Butadien[ppm] | 9 | 2 | nicht nachweisbar |
| 1-Buten [%] | 1,05 | 1,03 | 1 |
| H₂S [ppm] | 17 | 21 | 23 |
| O₂ [ppm] | 38 | 6 | < 0,5 |
| NOₓ [ppm] | 118 | 3,5 | <1 |
| CO[Vol.-%] | 3 | 3 | 2,9 |
| H₂[Vol.%] | 19,3 | 19,5 | 19,3 |
| C₂H₄[Vol.-%] | 13,0 | 12,9 | 12,9 |
| C₃H₆[Vol.-%] | 5,0 | 5,1 | 5,1 |

| | | | |
|---|---|---|---|
| Hg [ppm] | < 100 ppb | < 100 ppb | < 100 ppb |
| As [ppm] | < 100 ppb | < 100 ppb | < 100 ppb |
| Ethan [%] | 0,011 | 0,016 | 0,024 |
| Propan [%] | 0,005 | 0,007 | 0,01 |
| | | | |
| Methan Rest | | | |

Die Ergebnisse der Versuche sind in der nachstehenden Tabelle zusammengefasst:

| Temperaturbereich [°C] | **150-250 °C** | | |
|---|---|---|---|
| | **150 °C** | **175 °C** | **250 °C** |
| NOₓ-Umsatz [%] | **53** | **99** | **> 99,6** |
| O₂-Umsatz [%] | **82** | **97** | **>99,7** |
| Acetylen-Umsatz [%] | **30** | **80** | **> 99** |
| Ethan-Bildung [%] | **0,07** | **0,11** | **0,17** |
| Propan-Bildung [%] | **0,06** | **0,1** | **0,16** |

Der Katalysator wies eine hohe Aktivität für die Umsetzung der Verunreinigungen auf. Es wurden nur geringe Mengen Olefine hydriert. Die Umsetzung der Verunreinigungen war über den Testzeitraum von 1500 Stunden praktisch vollständig. Im Testverlauf wurde der Katalysator nicht deaktiviert. Eine Analyse des gebrauchten Katalysators zeigte, dass Arsen und Quecksilber auf dem Katalysator akkumuliert worden waren. Die Menge der akkumulierten Katalysatorgifte bewirkte jedoch keine Deaktivierung der aktiven KupferSpezies. Sulfidierte, kupferhaltige Katalysatoren sind somit gut zur Reinigung von Spaltgasen aus Crackern geeignet.

## Patentansprüche

1. Verfahren zur Entfernung von Acetylen und gegebenenfalls einer oder mehrerer der Komponenten, ausgewählt aus der Gruppe bestehend aus Sauerstoff, Stickstoffoxiden und Dienen, aus einem Gasgemisch, das Acetylen und gegebenenfalls eine oder mehrere der Komponenten, ausgewählt aus der Gruppe bestehend aus Sauerstoff, Stickstoffoxiden und Dienen, und daneben Wasserstoff, ein oder mehrere Olefine, die keine Diene sind, und gegebenenfalls weitere Gasbestandteile enthält, bei dem das Gasgemisch in einer Reaktionszone mit einem Katalysator in Kontakt gebracht wird, **dadurch gekennzeichnet, dass** der Katalysator Kupfer(I)sulfid enthält.

2. Verfahren nach Anspruch 1, **dadurch gekennzeichnet, dass** der Katalysator Kupfer(I)sulfid auf einem Träger enthält.

3. Verfahren nach Anspruch 1, **dadurch gekennzeichnet, dass** das Gasgemisch Sauerstoff enthält.

4. Verfahren nach Anspruch 1, **dadurch gekennzeichnet, dass** das Gasgemisch Stickstoffoxide enthält.

5. Verfahren nach Anspruch 1, **dadurch gekennzeichnet, dass** das Gasgemisch Diene enthält.

6. Verfahren nach Anspruch 1, **dadurch gekennzeichnet, dass** das Gasgemisch als Olefine Ethen und/oder Propen enthält.

7. Verfahren nach Anspruch 1, **dadurch gekennzeichnet, dass** der Sauerstoffgehalt des Eingangsgasgemischs im Bereich von 1 ppm bis 3 Vol.-% liegt.

8. Verfahren nach Anspruch 1, **dadurch gekennzeichnet, dass** der Stickstoffoxid-Gehalt des Eingangsgasgemischs im Bereich von 1 bis 2000 ppm liegt.

9. Verfahren nach Anspruch 1, **dadurch gekennzeichnet, dass** der Acetylenen-Gehalt des Eingangsgasgemischs im Bereich von 5 ppm bis 1 Vol.-% liegt.

10. Verfahren nach Anspruch 1, **dadurch gekennzeichnet, dass** der Dien-Gehalt des Eingangsgasgemischs im Bereich von 5 ppm bis 1 Vol.-% liegt.

11. Verfahren nach Anspruch 1, **dadurch gekennzeichnet, dass** der Wasserstoffgehalt des Gasgemischs im Bereich von 1 bis 70 Vol.-% liegt.

12. Verfahren nach Anspruch 1, **dadurch gekennzeichnet, dass** der Olefingehalt des Eingangsgasgemischs im Bereich von 1 bis 60 Vol.-% liegt.

13. Verfahren nach Anspruch 1, **dadurch gekennzeichnet, dass** die Temperatur in der Reaktionszone im Bereich von 150 bis 300 °C und der Druck in der Reaktionszone im Bereich von 5 bis 40 bar liegen.

14. Verfahren nach Anspruch 1, **dadurch gekennzeichnet, dass** das Eingangsgasgemisch eine oder mehrere Phosphor, Arsen, Cadmium, Quecksilber, Vanadium und/oder Blei enthaltende Verbindungen enthält, wobei diese durch Adsorption an dem Katalysator aus dem Gasgemisch entfernt werden.

## Claims

1. A process for removing acetylene and optionally one or more of the components selected from the group consisting of oxygen, nitrogen oxides and dienes from a gas mixture comprising acetylene and optionally one or more of the components selected from the group consisting of oxygen, nitrogen oxides and dienes, and also hydrogen, one or more olefins which are not dienes and optionally further gas constituents, in which the gas mixture is brought into contact with a catalyst in a reaction zone, wherein the catalyst comprises copper(I) sulfide.

2. The process according to claim 1, wherein the catalyst comprises copper(I) sulfide on a support.

3. The process according to claim 1, wherein the gas mixture comprises oxygen.

4. The process according to claim 1, wherein the gas mixture comprises nitrogen oxides.

5. The process according to claim 1, wherein the gas mixture comprises dienes.

6. The process according to claim 1, wherein the gas mixture comprises ethene and/or propene as olefins.

7. The process according to claim 1, wherein the oxygen content of the feed gas mixture is in the range from 1 ppm to 3% by volume.

8. The process according to claim 1, wherein the nitrogen oxide content of the feed gas mixture is in the range from 1 to 2000 ppm.

9. The process according to claim 1, wherein the acetylenes content of the feed gas mixture is in the range from 5 ppm to 1% by volume.

10. The process according to claim 1, wherein the diene content of the feed gas mixture is in the range from 5 ppm to 1% by volume.

11. The process according to claim 1, wherein the hydrogen content of the gas mixture is in the range from 1 to 70% by volume.

12. The process according to claim 1, wherein the olefin content of the feed gas mixture is in the range from 1 to 60% by volume.

13. The process according to claim 1, wherein the temperature in the reaction zone is in the range from 150 to 300°C and the pressure in the reaction zone is in the range from 5 to 40 bar.

14. The process according to claim 1, wherein the feed gas mixture comprises one or more compounds comprising phosphorus, arsenic, cadmium, mercury, vanadium and/or lead, with these being removed from the gas mixture by adsorption on the catalyst.

## Revendications

1. Procédé pour l'élimination d'acétylène et le cas échéant d'un ou de plusieurs des constituants, choisis dans le groupe constitué par l'oxygène, les oxydes d'azote et les diènes, d'un mélange gazeux, qui contient de l'acétylène et le cas échéant un ou plusieurs des constituants, choisis dans le groupe constitué par l'oxygène, les oxydes d'azote et les diènes, et en outre de l'hydrogène, une ou plusieurs oléfines, qui ne sont pas des diènes, et le cas échéant d'autres constituants gazeux, dans lequel le mélange gazeux est mis en contact, dans une zone de réaction, avec un catalyseur, **caractérisé en ce que** le catalyseur contient du sulfure de cuivre (I).

2. Procédé selon la revendication 1, **caractérisé en ce que** le catalyseur contient du sulfure de cuivre (I) sur un support.

3. Procédé selon la revendication 1, **caractérisé en ce que** le mélange gazeux contient de l'oxygène.

4. Procédé selon la revendication 1, **caractérisé en ce que** le mélange gazeux contient des oxydes d'azote.

5. Procédé selon la revendication 1, **caractérisé en ce que** le mélange gazeux contient des diènes.

6. Procédé selon la revendication 1, **caractérisé en ce que** le mélange gazeux contient, comme oléfines, de l'éthylène et/ou du propène.

7. Procédé selon la revendication 1, **caractérisé en ce que** la teneur en oxygène du mélange gazeux de départ se situe dans la plage de 1 ppm à 3% en volume.

8. Procédé selon la revendication 1, **caractérisé en ce que** la teneur en oxydes d'azote du mélange gazeux de départ se situe dans la plage de 1 à 2000 ppm.

9. Procédé selon la revendication 1, **caractérisé en ce que** la teneur en acétylène du mélange gazeux de départ se situe dans la plage de 5 ppm à 1% en volume.

10. Procédé selon la revendication 1, **caractérisé en ce que** la teneur en diènes du mélange gazeux de départ se situe dans la plage de 5 ppm à 1% en volume.

11. Procédé selon la revendication 1, **caractérisé en ce que** la teneur en hydrogène du mélange gazeux se situe dans la plage de 1 à 70% en volume.

12. Procédé selon la revendication 1, **caractérisé en ce que** la teneur en oléfines du mélange gazeux de départ se situe dans la plage de 1 à 60% en volume.

13. Procédé selon la revendication 1, **caractérisé en ce que** la température dans la zone de réaction se situe dans la plage de 150°C à 300°C et la pression dans la zone de réaction se situe dans la plage de 5 à 40 bars.

14. Procédé selon la revendication 1, **caractérisé en ce que** le mélange gazeux de départ contient un ou plusieurs composés contenant du phosphore, de l'arsenic, du cadmium, du mercure, du vanadium et/ou du plomb, ceux-ci étant éliminés du mélange gazeux par adsorption sur le catalyseur.
